# EUROPÄISCHE PATENTSCHRIFT

(11) **EP 2 505 701 B1**
(45) Veröffentlichungstag und Bekanntmachung des Hinweises auf die Patenterteilung: **31.12.2014**
(21) Anmeldenummer: 11160053.2
(22) Anmeldetag: 28.03.2011
(51) Int. Cl.: D03C 9/02, B21F 45/08

(54) **Mehrkomponenten-Kunststofflitze und Verfahren zu deren Herstellung**
Multiple component plastic heddle and method for its manufacture
Lisse en matière synthétique à plusieurs composants et son procédé de fabrication

(43) Veröffentlichungstag der Anmeldung: 03.10.2012
(73) Patentinhaber: Groz-Beckert KG, 72458 Albstadt (DE)
(72) Erfinder: Gerth, Christian, 72458 Albstadt (DE); Großmann, Rainer, 72477 Schwenningen (DE); Gusenko, Mario, 72458 Albstadt (DE)
(74) Vertreter: Rüger, Barthelt & Abel

(56) Entgegenhaltungen:
- EP-A1- 0 403 429
- CN-Y- 201 228 305

## Beschreibung

Die vorliegende Erfindung betrifft eine Weblitze für einen Webschaft einer Webmaschine. Die Weblitze weist einen Litzenkörper auf, der in Längsrichtung etwa mittig ein Fadenauge zur Aufnahme eines Kettfadens aufweist. Durch die Bewegung des Webschafts werden die von den Weblitzen geführten Kettfäden zur Öffnung oder zur Schließung eines Webfachs positioniert.

Eine Weblitze unterliegt einer großen Beanspruchung. Moderne Webmaschinen arbeiten mit hohen Webgeschwindigkeiten, so dass der Webschaft und die darin angeordneten Weblitzen stark beschleunigt bzw. verzögert werden. Der durch das Fadenauge geführte Kettfaden und die zwischen zwei benachbarten Weblitzen durch andere Webschäfte geführte Kettfäden bewegen sich relativ zu den Weblitzen, wodurch ein Verschleiß an der Weblitze verursacht wird. Abhängig von den für die Kettfäden verwendeten Garnen kann es dadurch zu einem übermäßig schnellen Verschleiß der Weblitze kommen. Die Weblitze muss ersetzt werden, was aufwendige und teure Webmaschinenstillstände mit sich bringt.

In CH 601 532 wird eine Weblitze beschrieben, deren Litzenkörper aus einem Flachstahl oder aus Doppeldraht besteht. Im Bereich der Endösen ist an den Flachstahl Kunststoffmaterial derart angespritzt, dass es sich zumindest in den Bereichen der Endösen befindet, der mit der Litzentragschiene des Webschafts in Kontakt kommen. Auf diese Weise soll eine Dämpfung und Lärmreduzierung erreicht werden.

Ferner beschreibt die EP 0 403 429 A1 die Möglichkeit, eine Weblitze vollständig aus Kunststoff herzustellen. Das Kunststoffmaterial dient hierbei als Kunststoffmatrix, die mit einem Schlauchgeflecht aus verschiedenen Fasersträngen verbunden ist. Zur Herstellung der Weblitze wird dieses Verbundmaterial als Meterware produziert und in der gewünschten Länge abgeschnitten. Anschließend werden das Fadenauge und die Endösen durch einen thermoplastischen Umformprozess ausgebildet.

Der fadenführende Bereich der Weblitze unterliegt einem besonders hohen Verschleiß. Deshalb muss insbesondere das Fadenauge der Weblitze besonders verschleißfest ausgeführt sein. Aus diesem Grund werden häufig metallische Litzenkörper verwendet. Allerdings weisen solche metallischen Litzenkörper ein relativ hohes Gewicht auf. Außerdem kann abhängig vom verwendeten Material eine Oberflächenbehandlung notwendig sein, um das Rosten des Litzenkörpers zu verhindern, insbesondere dann, wenn die Weblitze in einer Wasserdüsen-Webmaschine eingesetzt werden soll.

Andererseits sind Kunststofflitzen bekannt, die vollständig aus Kunststoff hergestellt sind. Da der fadenführende Bereich besonders verschleißfest sein muss, ist die Herstellung eines Litzenkörpers aus verschleißfestem Kunststoff- oder Verbundmaterial jedoch sehr teuer.

CN 201228305 Y beschreibt die Möglichkeit ein Fadenauge aus Porzellan herzustellen und einen Litzenkörper aus Plastik an dieses Fadenauge anzuspritzen.

Es kann daher als Aufgabe der vorliegenden Erfindung angesehen werden, eine leichte, verschleißfeste Weblitze zu schaffen, die kostengünstig herstellbar ist.

Diese Aufgabe wird durch eine Weblitze gemäß Patentanspruch 1 gelöst.

Erfindungsgemäß ist es vorgesehen, dass der Litzenkörper der Weblitze aus mehreren unterschiedlichen Kunststoff- oder Verbundmaterialien hergestellt ist. Er weist zumindest zwei und vorzugsweise drei bis fünf Längsabschnitte auf, die sich in Längsrichtung des Litzenkörpers aneinander anschließen. Zwei unmittelbar aneinander angrenzende Längsabschnitte des Litzenkörpers bestehen aus unterschiedlichen Kunststoff- oder Verbundmaterialien. Innerhalb eines Längsabschnitts wird ein einheitliches Kunstoff- oder Verbundmaterial verwendet.

Auf diese Weise ist es möglich, für jeden Längsabschnitt des Litzenkörpers das geeignete Kunststoff- oder Verbundmaterial einzusetzen, das die für diesen Längsabschnitt erforderlichen Eigenschaften aufweist. Beispielsweise kann der das Fadenauge aufweisende Längsabschnitt aus einem Kunststoff- oder Verbundmaterial hergestellt sein, das eine größere Verschleißfestigkeit aufweist, als die Kunststoff- oder Verbundmaterialien, die zur Herstellung der anderen Längsabschnitte des Litzenkörpers verwendet werden. Im Bereich der Endösen können Kunststoff- oder Verbundmaterialien eingesetzt werden, die gute Gleiteigenschaften gegenüber der Litzentragschiene aufweisen und eine hohe Zähigkeit aufweisen.

Die Längsabschnitte des Litzenkörpers werden bereits beim Gießen oder Spritzgießen des Litzenkörpers in der Form miteinander verbunden, so dass ein nachträglicher Fügeprozess wie Kleben oder Schweißen entfällt. Eine feste Verbindung zwischen den einzelnen Längsabschnitten entsteht somit in einem Prozessschritt, nämlich beim Gießen oder Spritzgießen des Litzenkörpers. Vorzugsweise wird für die Herstellung des Litzenkörpers ein Mehrkomponenten-Spritzgussverfahren angewandt. Die fließfähigen flüssigen oder pulverförmigen Ausgangsmaterialien für aneinander anschließende Längsabschnitte werden nacheinander oder gleichzeitig in die Form eingefüllt und verbinden sich an den Übergangsstellen noch innerhalb der Form. Insbesondere verschleißfeste Kunststoffe lassen sich nicht in jede beliebige Kavität der Herstellungsform einspritzen. Durch die Erfindung ist es möglich die Designfreiheit für den Litzenkörper zu erhöhen, insbesondere für die einem geringeren Verschleiß unterworfenen Längsabschnitte. Für solche Längsabschnitte kann ein zum Gießen der gewünschten Form geeignetes Kunststoff- oder Verbundmaterial ausgewählt werden. Bei allen für den Litzenkörper verwendeten Kunststoffen handelt es sich vorzugsweise um Thermoplaste.

Vorzugsweise sind die Übergangsstellen zwischen zwei aneinander anschließenden Längsabschnitten durch Querschnittsebenen gebildet, die keiner besonderen Ausgestaltung bedürfen, was die Herstellung der Weblitze weiter vereinfacht. Es ist alternativ hierzu jedoch auch möglich, an den beiden aneinander angrenzenden Längsabschnitten komplementäre Fortsätze und/oder Ausnehmungen anzuformen, so dass die Kontaktfläche zwischen den beiden Längsabschnitten vergrößert wird. Es lassen sich auch formschlüssige Verbindungen zwischen zwei Längsabschnitten beim Herstellen des Litzenkörpers in der Gussform erzeugen.

Jeder der Längsabschnitte des Litzenkörpers besteht vorzugsweise aus einem einheitlichen Kunststoff- oder Verbundmaterial. Innerhalb eines Längsabschnitts kommt daher jeweils nur ein Kunststoff- oder Verbundmaterial zum Einsatz. Dies gilt unabhängig davon, dass in den Übergangsbereichen zwischen zwei aufeinanderfolgenden Längsabschnitten eine gewisse Überlappung zwischen zwei Längsabschnitten und damit auch zwischen zwei unterschiedlichen Kunststoff- oder Verbundmaterialien vorgesehen sein kann. Derartige Überlappungen unterschiedlicher Kunststoff- oder Verbundmaterialien sind allerdings räumlich auf die Überlappungsbereiche zwischen zwei Längsabschnitten begrenzt auf insbesondere maximal 10 bis 15 mm.

Es ist von Vorteil, wenn zumindest ein Längsabschnitt aus einem Verbundmaterial besteht, wobei der Kunststoff als Kunststoffmatrix dient, die mit Zusatzelementen versehen ist. Die Zusatzelemente können kurze Fasern (so genannte "Whiskers") und/oder kugelförmige Elemente und/oder andere Körper enthalten. Dadurch kann beispielsweise die Verschleißfestigkeit und/oder die Zugfestigkeit des als Kunststoffmatrix dienenden Kunststoffmaterials weiter vergrößert werden. Als Werkstoffe für die Zusatzelemente eignet sich Karbon und/oder Glas und/oder Keramik und/oder Metall und/oder verschleißfeste Kunststoffkörper.

Als Kunststoff zur Herstellung eines Längsabschnitts des Litzenkörpers können eine oder mehrere der folgenden Kunststoffe verwendet werden: Polyamide, Kopolymere, Polykarbonate, Polyethylene, Polypropylene, Polystyrole, Phenolharze, etc. Diese Kunststoffe können allein oder in Kombination mit Zusatzelementen als Verbundwerkstoffe für Längsabschnitte eingesetzt werden.

Die Weblitze weist vorzugsweise einen mittleren Längsabschnitt auf, der das Fadenauge enthält. Insbesondere sind weiter zwei endseitige Längsabschnitte vorhanden, die jeweils eine Endöse der Weblitze enthalten. Der mittlere Längsabschnitt und die beiden endseitigen Längsabschnitte können durch jeweils einen Übergangs-Längsabschnitt miteinander verbunden sein. Bei dieser Aufteilung der Weblitze in drei oder fünf Längsabschnitte lässt sich das jeweils zur Herstellung verwendete Kunststoff- oder Verbundmaterial besonders gezielt auf die Funktion des jeweiligen Längsabschnitts abstimmen, so dass eine besonders langlebige Weblitze hergestellt werden kann. Gleichzeitig kann der Einsatz von teuren Kunststoff- oder Verbundmaterialien auf diejenigen Längsabschnitte beschränkt werden, die den Einsatz eines solchen Materials erfordern.

Bei einem Ausführungsbeispiel weist der das Fadenauge enthaltende Längsabschnitt die größte Verschleißfestigkeit auf und ist daher insbesondere aus Verbundwerkstoff hergestellt. Demgegenüber können insbesondere die Übergangs-Längsabschnitte aus einem weniger verschleißfesten Kunststoffmaterial ohne Zusatzelemente hergestellt sein, beispielsweise aus Polyethylen, Polypropylen oder Polykarbonat. Für den das Fadenauge enthaltenden mittleren Längsabschnitt kommt insbesondere Polyamid zur Herstellung in Betracht, das allein oder in Kombination mit Zusatzelementen als Verbundwerkstoff zur Herstellung eingesetzt werden kann.

Die Herstellung der Weblitze vereinfacht sich beispielsweise dadurch, dass das Fadenauge unmittelbar vom Litzenkörper bzw. vom mittleren Längsabschnitt sozusagen einsatzlos gebildet ist. Ein eingesetztes Maillon als Fadenauge kann entfallen. Es ist jedoch auch möglich an oder in dem Litzenkörper Armierungen aus langen Fasern - die um den Faktor 10 größer sein können als die kurzen "Whiskers" - oder plattenförmigen Elementen, beispielsweise Metallplatten, anzuordnen, wenn dies zur Verstärkung des Litzenkörpers an bestimmten Stellen erforderlich oder wünschenswert ist. Beispielsweise können Armierungen in Form von Metallplatten an den Übergangsstellen zwischen zwei aufeinanderfolgenden Längsabschnitten vorgesehen sein.

Vorteilhafte Ausgestaltungen der Weblitze sowie des Herstellungsverfahrens einer solchen Weblitze ergeben sich aus den abhängigen Patentansprüchen und der Beschreibung. Die Beschreibung beschränkt sich auf wesentliche Merkmale der Erfindung. Die Zeichnung ist ergänzend heranzuziehen. Es zeigen:
Fig. 1 eine schematische Draufsicht auf ein Ausführungsbeispiel einer Weblitze mit fünf Längsabschnitten,
Fig. 2 die Weblitze aus Fig. 1 in schematischer Draufsicht und in mehreren Querschnittsdarstellungen,
Figuren 3 und 4 jeweils eine Teildarstellung des mittleren Längsabschnitts in schematischer Darstellung, wobei zur Herstellung ein Verbundmaterial mit faserförmigen oder kugelförmigen Zusatzelementen verwendet wurde und
Figuren 5 bis 9 verschiedene Ausgestaltungsmöglichkeiten für den Übergangsbereich zwischen zwei in Längsrichtung des Litzenkörpers unmittelbar aufeinanderfolgenden Längsabschnitten in schematischer Darstellung.

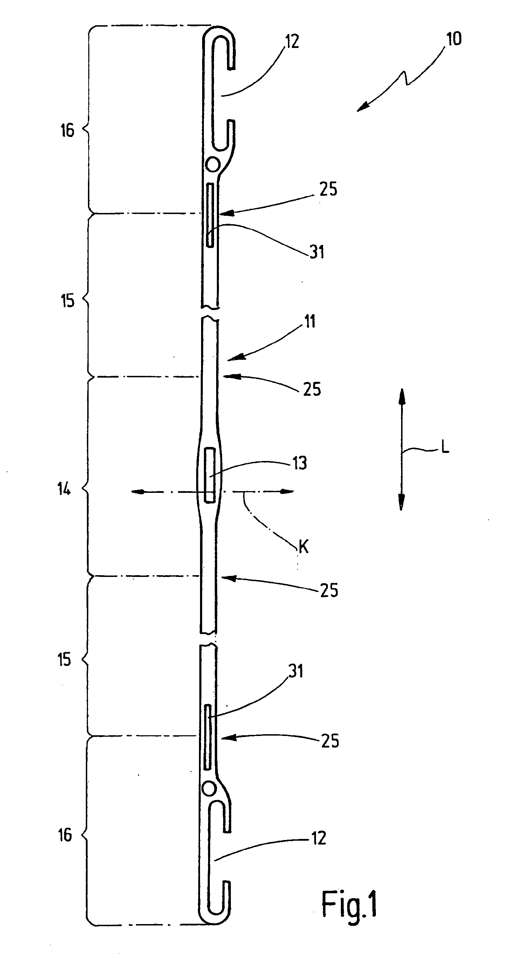

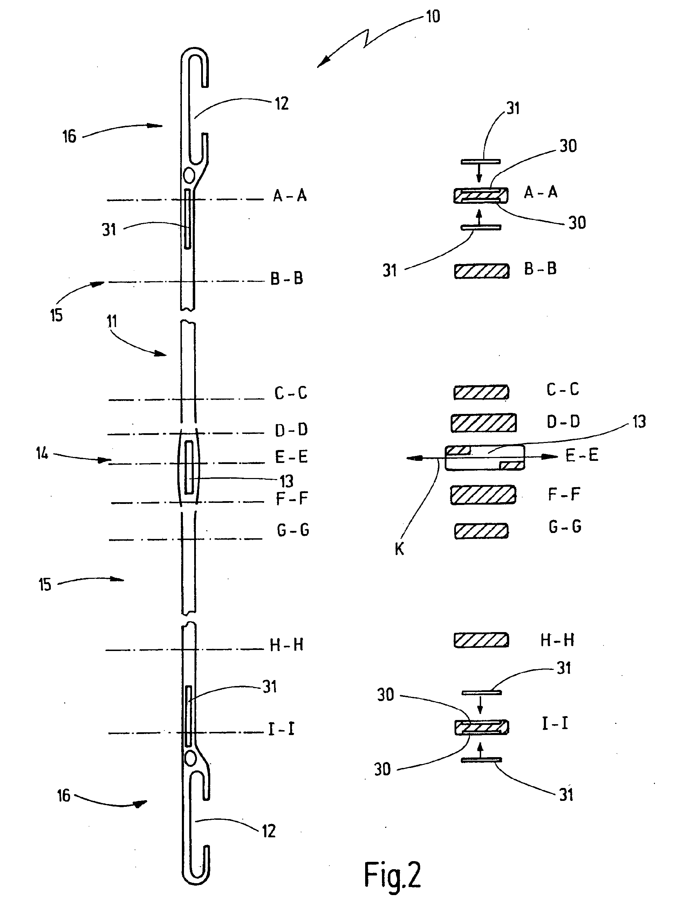

In den Figuren 1 und 2 ist eine Weblitze 10 mit einem Litzenkörper 11 dargestellt, der sich in einer Längsrichtung L erstreckt. Der Litzenkörper 11 weist an seinen beiden Enden jeweils eine Endöse 12 auf, die zur Befestigung der Weblitze 10 an einer Litzentragschiene eines Webschafts dient. Die Endösen 12 können wie beim dargestellten Ausführungsbeispiel an einer Stelle geöffnet sein. Solche Endösen 12 können als C-förmige Endösen mit zwei etwa gleich langen Stegen zu beiden Seiten der Öffnung (Figur 1) oder als J-förmige Endösen mit zwei unterschiedlich langen Stegen zu beiden Seiten der Öffnung ausgeführt sein. Alternativ hierzu kann die Endöse rings umlaufend geschlossen als Oförmige Endöse ausgeführt sein.

Der Litzenkörper 11 weist in der Mitte ein Fadenauge 13 auf, das zur Aufnahme eines Kettfadens dient. Der Kettfaden durchsetzt das Fadenauge 13 in einer Kettfadenrichtung quer zur Längsrichtung L des Litzenkörpers 11.

Der Litzenkörper 11 ist vollständig aus mehreren Kunststoff- oder Verbundmaterialien hergestellt. Er weist einen das Fadenauge 13 aufweisenden mittleren Längsabschnitt 14 auf, an den sich jeweils ein Übergangs-Längsabschnitt 15 anschließt. Der Litzenkörper 11 enthält ferner zwei endseitige Längsabschnitte 16, die jeweils eine Endöse 12 enthalten. Die beiden endseitigen Längsabschnitte 16 sind unmittelbar mit jeweils einem der Übergangs-Längsabschnitte 15 verbunden. In Abwandlung zum dargestellten Ausführungsbeispiel könnten die endseitigen Längsabschnitte 16 auch unmittelbar mit dem mittleren Längsabschnitt 14 verbunden sein, wodurch die Übergangs-Längsabschnitte 15 entfallen. Die Anzahl der Längsabschnitte kann variieren.

Zwei in Längsrichtung L des Litzenkörpers 11 aufeinanderfolgende Längsabschnitte 14, 15 bzw. 15, 16 sind aus unterschiedlichen Kunststoff- oder Verbundmaterialien hergestellt. Dadurch ist es möglich, abhängig von den gewünschten Eigenschaften des Litzenkörpers 11 im betreffenden Längsabschnitt 14, 15, 16 ein geeignetes Kunststoffmaterial oder Verbundmaterial auszuwählen und zur Herstellung des entsprechenden Längsabschnitts zu verwenden. Die Weblitze 10 kann daher auch als Mehrkomponenten-Kunststofflitze bezeichnet werden. Der Litzenkörper 11 wird durch Gießen und insbesondere Spritzgießen in einer Form hergestellt, wobei die Verbindung der einzelnen Längsabschnitte 14, 15, 16 bereits bei der Herstellung des Litzenkörpers 11 in der Form erfolgt. Nachfolgende Fügeprozesse wie Kleben oder Schweißen sind nicht erforderlich.

Jeder der Längsabschnitte 14, 15, 16 besteht aus einem einheitlichen und vorzugsweise homogenen Kunststoff oder Verbundmaterial. Die für den Litzenkörper verwendeten Materialien können sehr einfach durch mechanisches Trennen der einzelnen Längsabschnitte 14, 15, 16 voneinander ebenfalls voneinander getrennt werden, beispielsweise zur Wiederverwertung des Materialien einer nicht mehr verwendeten Weblitze 10. Innerhalb eines Längsabschnitts 14, 15, 16 wird ein einziges Kunstoff- oder Verbundmaterial zu dessen Herstellung verwendet und in eine entsprechende Kavität der Form zur Herstellung des Litzenkörpers 11 eingefüllt bzw. eingespritzt. Die einem Längsabschnitt 14, 15, 16 zugeordnete Kavität in der Herstellungsform kann zeitgleich oder zeitversetzt mit den benachbarten Kavitäten zur Herstellung des in Längsrichtung L unmittelbar anschließenden Längsabschnitts befüllt werden. In jedem Fall erfolgt die Verbindung zwischen zwei aneinander anschließenden Längsabschnitten 14, 15 bzw. 15, 16 innerhalb der Herstellungsform für den Litzenkörper 11.

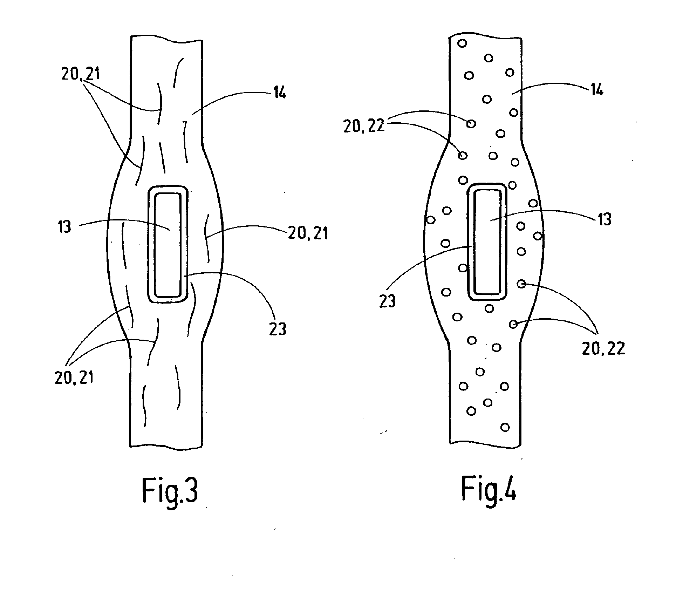

Als Kunststoff für den mittleren Längsbereich 14 wird ein verschleißfester Kunststoff verwendet, da das im mittleren Längsbereich 14 vorgesehene Fadenauge 13 durch Kontakt mit dem durchgeführten Kettfaden einem besonders hohen Verschleiß unterworfen ist. Als Kunststoff eignet sich hierfür beispielsweise ein Polyamid. Wie in den Figuren 3 und 4 schematisch veranschaulicht ist, dient der für den mittleren Längsbereich 14 verwendete Kunststoff als Kunststoffmatrix, die gemeinsam mit darin verteilt angeordneten Zusatzelementen 20 einen Verbundwerkstoff bildet. Als Zusatzelemente 20 können kurze Fasern - so genannte Whiskers 21 - oder Kugeln oder anders geformte Zusatzelemente 20 eingesetzt werden. Derartige Zusatzelemente 20 sind beim bevorzugten Ausführungsbeispiel aus Karbon oder Glas oder Keramik oder Metall hergestellt und werden der Kunststoffmatrix zugefügt. Auch eine Kombination von Zusatzelementen 20 aus unterschiedlichen Materialien und/oder unterschiedlichen Formen ist möglich. Im mittleren Längsabschnitt 14 können die Zusatzelemente 20 dazu dienen, die Verschleißfestigkeit des Litzenkörpers 11 zu erhöhen.

Das Fadenauge 13 ist beim bevorzugten Ausführungsbeispiel unmittelbar von dem Litzenkörper 11 begrenzt. In den mittleren Längsabschnitt 14 ist mithin kein Einsatz, wie etwa ein Maillon, zur Bildung des Fadenauges eingebracht. Bei einer abgewandelten Ausführungsform kann es jedoch auch vorteilhaft sein, ein Maillon 23 in den mittleren Längsabschnitt 14 einzubringen. Das Maillon 23 kann nach der Herstellung des Litzenkörpers 11 eingesetzt werden oder alternativ in die Form zur Herstellung des Litzenkörpers eingesetzt und mit dem Kunststoff oder Verbundmaterial umspritzt werden.

Zur Herstellung der beiden endseitigen Längsabschnitte 16 kann beispielsweise ebenfalls Polyamid mit Zusatzelementen 20 oder ohne Zusatzelemente 20 verwendet werden. Bei dem für die endseitigen Längsabschnitte 16 verwendeten Kunststoff- oder Verbundmaterial kommt es darauf an, dass es günstige Gleiteigenschaften gegenüber der Litzentragschiene aufweist und eine erforderliche Zähigkeit und/oder Elastizität bietet, so dass durch das Spiel der Endösen 12 gegenüber der Litzentragschiene und die dadurch verursachte Relativbewegung der Weblitze 10 gegenüber der Litzentragschiene bzw. dem Webschaft kein übermäßiger Verschleiß verursacht wird.

Für die Übergangs-Längsabschnitte 15 bestehen weniger große Anforderungen in Hinblick auf Verschleißfestigkeit. Für diese Längsabschnitte 15 können daher einfachere Kunststoffmaterialien eingesetzt werden. Vorzugsweise wird für die Übergangs-Längsabschnitte 15 ein einheitliches Kunststoffmaterial ohne Zusatzelemente 20 und somit kein Verbundwerkstoff eingesetzt. Dadurch können die Herstellungskosten der Weblitze 10 reduziert werden. Als Kunststoffmaterial für die Herstellung der Übergangs-Längsabschnitte 15 eignet sich beispielsweise Polykarbonat, Polyethylen oder Polypropylen.

Durch die Verwendung verschiedener Kunststoff- bzw. Verbundmaterialien für unterschiedliche Längsabschnitte 14, 15, 16 des Litzenkörpers können gezielt solche Materialien verwendet werden, die dem Litzenkörper 11 in dem betreffenden Längsabschnitt 14, 15, 16 die gewünschten Eigenschaften verleihen, etwa im Hinblick auf eine Soll-Zugfestigkeit und/oder eine Soll-Verschleißfestigkeit. Dieser Effekt kann außerdem dadurch verstärkt werden, dass die Kontur des Litzenkörpers 11 in den verschiedenen Längsabschnitten 14, 15, 16 variiert. Wie in Fig. 2 veranschaulicht ist, nimmt die Breite des Litzenkörpers 11 zum Fadenauge 13 hin zu. Die Breite wird dabei quer zur Längsrichtung L und quer zur Kettfadenrichtung K gemessen. Im mittleren Längsabschnitt 14 um das Fadenauge 13 herum vergrößert sich auch die Dicke des Litzenkörpers 11 in Kettfadenrichtung K gesehen. Im Gegensatz zu metallischen Litzenkörpern kann durch die Herstellung des Litzenkörpers 11 aus verschiedenen Kunststoffoder Verbundmaterialien eine sehr einfache Variation der Breite und Dicke des Litzenkörpers 11 bei der Herstellung durch Gießen oder Spritzgießen erreicht werden.

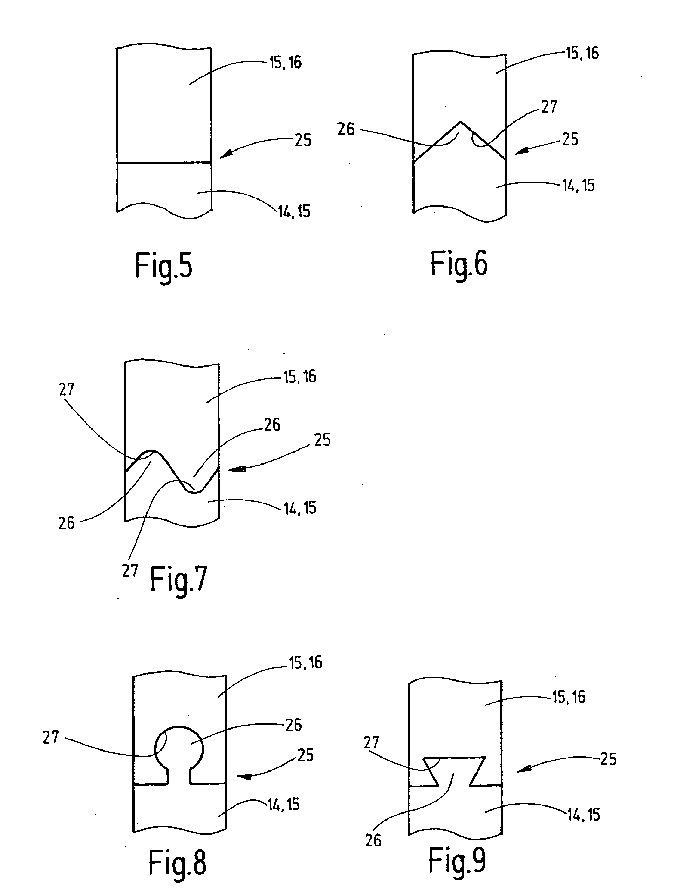

In Längsrichtung L aufeinanderfolgende Längsabschnitte 14, 15, 16 grenzen an jeweils einer Übergangsstelle 25 aneinander an. An der Übergangsstelle 25 ändert sich dabei das Material des Litzenkörpers 11 in Längsrichtung L. Dabei kann es in Längsrichtung L in einem räumlich begrenzten Bereich an der Übergangsstelle 25 zu Überlappungen zwischen den beiden miteinander verbundenen Längsabschnitten 14, 15 bzw. 15, 16 kommen, wie dies beispielhaft in den Figuren 6 bis 9 dargestellt ist.

Die Figuren 5 bis 9 zeigen beispielhaft und stark idealisiert eine Auswahl von Möglichkeiten, wie der Übergang zwischen zwei in Längsrichtung miteinander verbundenen Längsabschnitten 14, 15 bzw. 15, 16 ausgeführt sein kann.

Eine hinsichtlich der Herstellung sehr einfache Möglichkeit ist in Fig. 5 dargestellt, bei der die Verbindungsfläche zwischen den beiden Materialien im Wesentlichen rechtwinklig zur Längsrichtung L angeordnet ist. In Abwandlung hierzu ist es jedoch auch möglich, die Kontaktfläche im Bereich der Übergangsstelle 25 zwischen zwei Längsabschnitten 14, 15 bzw. 15, 16 zu vergrößern, wie dies beispielhaft anhand der Figuren 6 und 7 veranschaulicht ist. Hierzu können an der Übergangsstelle 25 ein oder mehrere Vorsprünge 26 an einem Längsbereich 14, 15, 16 und eine jeweils komplementäre Ausnehmung 27 am jeweils anderen Längsbereich 14, 15, 16 vorgesehen sein. Die Anzahl und die Kontur der Vorsprünge 26 und der entsprechenden Ausnehmungen 27 kann variieren. Dabei können Kanten bzw. Ecken oder auch kantenlose Konturen vorgesehen werden.

Es ist auch möglich, unmittelbar beim Spritzgießen an den Vorsprüngen 26 bzw. Ausnehmungen 27 Hinterschneidungen herzustellen, so dass zusätzlich zu der stofflichen Verbindung zwischen den Materialien zweier Längsabschnitte 14, 15, 16 auch eine sozusagen formschlüssige Verbindung erzeugt werden kann, wie dies beispielhaft in den Figuren 8 und 9 dargestellt ist.

Um lokal die Festigkeit des Litzenkörpers 11 zu verbessern, können am oder im Litzenkörper 11 bzw. an oder in einzelnen Längsabschnitten 14, 15, 16 auch Armierungen in Form von langen Fasern oder plattenförmigen Elementen angebracht werden. Beispielhaft ist in Fig. 2 veranschaulicht, dass an der Übergangsstelle 25 zwischen dem Übergangs-Längsabschnitt 15 und dem endseitigen Abschnitt 16 an der Außenfläche des Litzenkörpers 11 eine Vertiefung 30 vorgesehen ist, die sich über die Übergangsstelle 25 hinweg und teilweise in den endseitigen Längsabschnitt 16 und teilweise in den Übergangs-Längsabschnitt 15 hinein erstreckt. Diese Vertiefung 30 ist beim Ausführungsbeispiel auf zwei gegenüberliegenden Flachseiten des Litzenkörpers 11 vorgesehen. Alternativ hierzu kann diese Ausnehmung auch lediglich auf einer Flachseite vorhanden sein.

In die Vertiefungen 30 ist eine Platte 31, beispielsweise eine Metallplatte eingesetzt, die als Armierung dient, um die Zugfestigkeit im Bereich der Übergangsstelle 25 zwischen dem Übergangs-Längsabschnitt 15 und dem endseitigen Längsabschnitt 16 zu erhöhen. In Abwandlung zum dargestellten Ausführungsbeispiel könnten solche Vertiefungen 30 mit Armierungsplatten 31 auch an weiteren Übergangsstellen 25 oder innerhalb eines der Längsabschnitte 14, 15, 16 vorgesehen werden, um den Mehrkomponenten-Litzenkörper 11 lokal zu verstärken.

Die Erfindung betrifft eine Weblitze 10, die einen Litzenkörper 11 mit einem Fadenauge 13 und zwei endseitigen Endösen 12 aufweist. Der Litzenkörper 11 ist aus verschiedenen Kunststoffmaterialien und/oder Verbundwerkstoffen vorzugsweise durch Gießen oder Mehrkomponenten-Spritzgießen hergestellt. Er weist mindestens zwei in Längsrichtung L des Litzenkörpers 11 aufeinanderfolgende Längsabschnitte 14, 15, 16 auf. Zwei unmittelbar miteinander verbundene Längsabschnitte 14, 15 bzw. 15, 16 sind aus unterschiedlichen Kunststoffmaterialien bzw. unterschiedlichen Verbundwerkstoffen hergestellt. Die Verbundwerkstoffe weisen eine Kunststoffmatrix mit Zusatzelementen 20 auf. Der Litzenkörper 11 mit seinen Längsabschnitten 14, 15, 16 ist in einem einzigen Herstellungsschritt hergestellt, wobei die aneinander angrenzenden Längsabschnitte 14, 15, 16 miteinander verbunden werden. Durch die Verwendung unterschiedlicher Kunststoffe bzw. Verbundwerkstoffe für die einzelnen Längsabschnitte 14, 15, 16 kann das Material auf die gewünschte Eigenschaft des betreffenden Längsabschnitts 14, 15, 16 angepasst und gleichzeitig eine kostengünstige Herstellung der Weblitze 10 erreicht werden.

### Bezugszeichenliste:

- 10: Weblitze
- 11: Litzenkörper
- 12: Endöse
- 13: Fadenauge
- 14: mittlerer Längsabschnitt
- 15: Übergangs-Längsabschnitt
- 16: endseitiger Längsabschnitt
- 20: Zusatzelement
- 21: Faser
- 22: Kugel
- 23: Maillon
- 25: Übergangsstelle
- 26: Vorsprung
- 27: Ausnehmung
- 30: Vertiefung
- 31: Platte
- K: Kettfadenrichtung
- L: Längsrichtung

## Patentansprüche

1. Weblitze (10) für einen Webschaft,
mit einem Litzenkörper (11), .der sich in einer Längsrichtung (L) erstreckt und der ein Fadenauge (13) aufweist, das zur Aufnahme eines Kettfadens dient,
wobei der Litzenkörper (11) zumindest zwei sich in Längsrichtung (L) aneinander anschließende Längsabschnitte (14, 15, 16) aufweist,
und wobei zwei axial unmittelbar aneinander anschließende Längsabschnitte (14 und 15, 15 und 16) unterschiedliche Kunststoff- oder Verbundmaterialien enthalten und **dadurch gekennzeichnet, dass** die zwei axial unmittelbar aneinander anschließende Längsabschnitte (14 und 15, 15 und 16) aus fließfähigen flüssigen oder pulverförmigen Ausgangsmaterialien durch Gießen oder Spritzgießen hergestellt und dadurch miteinander verbunden sind.

2. Weblitze nach Anspruch 1,
**dadurch gekennzeichnet, dass** zwei axial unmittelbar aneinender anschließende Längsabschnitte (14 und 15, 15 und 16) durch gleichzeitiges oder zeitversetztes Einfüllen des jeweiligen Kunststoffmaterials in eine Form unmittelbar bei der Herstellung des Litzenkörpers (11) miteinander verbunden werden.

3. Weblitze nach Anspruch 1,
**dadurch gekennzeichnet, dass** jeder Längsabschnitt (14, 15, 16) des Litzenkörpers (11) aus einem einheitlichen Kunststoff- oder Verbundmaterial hergestellt sind.

4. Weblitze nach Anspruch 1,
**dadurch gekennzeichnet, dass** zumindest ein Längsabschnitt (14) aus Verbundmaterial besteht, das eine Kunststoffmatrix aufweist, die mit Zusatzelementen (20) aus Metall und/oder Glas und/oder Keramik verbunden ist.

5. Weblitze nach Anspruch 4,
**dadurch gekennzeichnet, dass** die Zusatzelemente (20) in Form von Fasern (21) und/oder Kugeln (22) im Kunststoffmaterial angeordnet sind.

6. Weblitze nach Anspruch 1,
**dadurch gekennzeichnet, dass** ein mittlerer Längsabschnitt (14) vorgesehen ist, der das Fadenauge (13) aufweist und dass zwei endseitige Längsabschnitte (16) vorgesehen sind, die jeweils eine Endöse (12) aufweisen.

7. Weblitze nach Anspruch 6,
**dadurch gekennzeichnet, dass** der mittlere Längsabschnitt (14) über jeweils einen Übergangs-Längsabschnitt (15) mit den endseitigen Längsabschnitten (16) verbunden ist.

8. Weblitze nach Anspruch 7,
**dadurch gekennzeichnet, dass** das für den mittleren Längsabschnitt (14) verwendete Kunststoff- oder Verbundmaterial und/oder das für die endseitigen Längsabschnitte (16) verwendete Kunststoff- oder Verbundmaterial eine höhere Verschließfestigkeit aufweist als das für die Übergangs-Längsabschnitte (15) verwendete Kunststoff- oder Verbundmaterial.

9. Weblitze nach Anspruch 7,
**dadurch gekennzeichnet, dass** für die Übergangs-Längsabschnitte (15) ein Kunststoffmaterial ohne Zusatzelemente (20) verwendet wird.

10. Weblitze nach Anspruch 1,
**dadurch gekennzeichnet, dass** das Fadenauge (13) unmittelbar vom Litzenkörper (11) gebildet ist.

11. Weblitze nach Anspruch 1,
**dadurch gekennzeichnet, dass** an oder im Litzenkörper (11) Armierungen (31) angeordnet sind.

12. Verfahren zur Herstellung einer Weblitze (10) mit einem Litzenkörper (11), der sich in einer Längsrichtung (L) erstreckt und der ein Fadenauge (13) aufweist, das zur Aufnahme eines Kettfadens dient, mit den Schritten:
- Einfüllen eines fließfähigen flüssigen oder pulverförmigen Kunststoff- oder Verbundmaterials in eine Form zur Herstellung eines ersten Längsabschnitts (14, 15, 16),
- gleichzeitiges oder zeitversetztes Einfüllen eines anderen fließfähigen flüssigen oder pulverförmigen Kunststoff- oder Verbundmaterials in die Form zur Herstellung eines sich in Längsrichtung (L) unmittelbar an den ersten Längsabschnitt (14, 15, 16) anschließenden weiteren Längsabschnitts (14, 15, 16), so dass die beiden aneinander anschließenden Längsabschnitte (14, 15 oder 15, 16) in der Form miteinander verbunden werden.

## Claims

1. Heald (10) for a heald frame,
with a heald body (11), which extends in a longitudinal direction (L) and which has a thread eyelet (13) that serves to receive a warp thread,
wherein the heald body (11) has at least two longitudinal sections (14, 15, 16) adjoining one another in the longitudinal direction (L),
and wherein two longitudinal sections (14 and 15, 15 and 16) directly adjoining one another axially contain different plastic or composite materials and **characterised in that** the two longitudinal sections (14 and 15, 15 and 16) directly adjoining one another axially are produced from flowable liquid or powder starting materials by casting or injection moulding and are thus joined to one another.

2. Heald according to claim 1, **characterised in that** two longitudinal sections (14 and 15, 15 and 16) directly adjoining one another axially are joined to one another by pouring the respective plastic material into a mould simultaneously or with time delay directly during the production of the heald body (11).

3. Heald according to claim 1, **characterised in that** each longitudinal section (14, 15, 16) of the heald body (11) is produced from a uniform plastic or composite material.

4. Heald according to claim 1, **characterised in that** at least one longitudinal section (14) is made from composite material, which has a plastic matrix, which is joined to addition elements (20) composed of metal and/or glass and/or ceramic.

5. Heald according to claim 4, **characterised in that** the addition elements (20) are arranged in the plastic matrix in the form of fibres (21) and/or spheres (22).

6. Heald according to claim 1, **characterised in that** a middle longitudinal section (14) is provided, which has the thread eyelet (13), and that two end longitudinal sections (16) are provided, which respectively have an end eyelet (12).

7. Heald according to claim 6, **characterised in that** the middle longitudinal section (14) is connected to the end longitudinal sections (16) by means of a respective transition longitudinal section (15).

8. Heald according to claim 7, **characterised in that** the plastic or composite material used for the middle longitudinal section (14) and/or the plastic or composite material used for the end longitudinal sections (16) has a higher wear resistance than the plastic or composite material used for the transition longitudinal sections (15).

9. Heald according to claim 7, **characterised in that** a plastic material without additional elements (20) is used for the transition longitudinal sections (15).

10. Heald according to claim 1, **characterised in that** the thread eyelet (13) is formed directly by the heald body (11).

11. Heald according to claim 1, **characterised in that** reinforcements (31) are arranged on or in the heald body (11).

12. Process for the production of a heald (10) with a heald body (11), which extends in a longitudinal direction (L) and which has a thread eyelet (13) that serves to receive a warp thread, with the steps:
• pouring a flowable liquid or powder plastic or composite material into a mould for the production of a first longitudinal section (14, 15, 16),
• pouring another flowable Liquid or powder plastic or composite material simultaneously or with time delay into the mould for the production of a further longitudinal section (14, 15, 16) directly adjoining the first longitudinal section (14, 15, 16) in the longitudinal direction (L), so that the two adjoining longitudinal sections (14, 15 or 15, 16) arc joined to one another in the mould.

## Revendications

1. Lisse de tissage (10) destinée à une lame de tissage,
comportant un corps de lisse (11) qui s'étend dans une direction longitudinale (L) et qui présente un oeil (13) pour fil, qui sert à recevoir un fil de chaîne,
le corps de lisse (11) présentant au moins deux segments longitudinaux (14, 15, 16) raccordés les uns aux autres dans la direction longitudinale (L),
et deux segments longitudinaux (14 et 15, 15 et 16) raccordés directement l'un à l'autre axialement, contenant des matériaux différents du type matière de synthèse ou du type composite et
**caractérisée en ce que** les deux segments longitudinaux (14 et 15, 15 et 16) raccordés directement l'un à l'autre axialement sont fabriqués par coulée ou par extrusion à partir de matériaux de départ susceptibles de fluer, liquide ou en poudre et sont de ce fait reliés l'un à l'autre.

2. Lisse de tissage selon la revendication 1
**caractérisée en ce que** deux segments longitudinaux (14 et 15, 15 et 16) reliés axialement directement l'un à l'autre, sont reliés l'un à l'autre lors de la fabrication du corps de lisse (11) par l'introduction dans un moule de façon simultanée ou décalée dans le temps du matériau du type matière de synthèse considéré.

3. Lisse de tissage selon la revendication 1
**caractérisée en ce que** chaque segment longitudinal (14, 15, 15) du corps de lisse (11) est fabriqué à partir d'un matériau du type matière de synthèse unique ou d'un matériau du type composite unique.

4. Lisse de tissage selon la revendication 1
**caractérisée en ce qu'**au moins un segment longitudinal (14) est constitué d'un matériau du type composite qui présente une matrice de matière de synthèse qui est reliée à des éléments additionnels (20) en métal et/ou en verre et/ou en céramique.

5. Lisse de tissage selon la revendication 4
**caractérisée en ce que** les éléments additionnels (20) sont disposés dans le matériau du type matière de synthèse sous forme de fibres (21) et/ou de billes (22).

6. Lisse de tissage selon la revendication 1
**caractérisée en ce qu'**un segment longitudinal (14) médian est prévu, lequel présente l'oeil pour fil (13) et **en ce que** deux segments longitudinaux terminaux (16) sont prévus, lesquels présentent chacun un oeillet d'extrémité (12)

7. Lisse de tissage selon la revendication 6
**caractérisée en ce que** le segment longitudinal médian (14) est relié aux segments longitudinaux terminaux (15) dans chaque cas par l'intermédiaire d'un segment longitudinal de transition (16).

8. Lisse de tissage selon la revendication 7
**caractérisée en ce que** le matériau du type matière de synthèse ou du type composite utilisé pour le segment longitudinal médian (14) et/ou **en ce que** le matériau du type matière de synthèse et/ou du type composite utilisé pour les segments longitudinaux terminaux (16) est doté d'une résistance à l'usure supérieure à celle du matériau du type matière de synthèse, ou du matériau du type composite utilisé pour les segments longitudinaux de transition (15).

9. Lisse de tissage selon la revendication 7
**caractérisée en ce qu'**un matériau du type matière de synthèse sans éléments additionnels (20) est utilisé pour les segments longitudinaux de transition (15).

10. Lisse de tissage selon la revendication 1
caractérisée en ce vue l'oeil (13) pour fil est formé directement à partir du corps de lisse (11).

11. Lisse de tissage selon la revendication 1
**caractérisée en ce que** des renforts (31) sont disposés sur ou dans le corps de lisse (11).

12. Procédé de fabrication d'une lisse de tissage (10) comportant un corps de lisse (11) qui s'étend dans une direction longitudinale (L) et un oeil (13) pour fil qui sert à la réception d'un fil de chaîne, comportant les opérations suivantes :
- Introduction dans un moule d'un matériau du type matière de synthèse ou du type composite susceptible de fluer, liquide ou en poudre, en vue de la fabrication d'un premier segment longitudinal (14, 15, 16),
- Introduction dans le moule de façon simultanée ou avec un décalage temporel, d'un matériau du type matière de synthèse ou du type composite susceptible de fluer, liquide ou en poudre, en vue de la fabrication d'un segment longitudinal supplémentaire (14, 15, 16) qui se raccorde directement, dans la direction longitudinale (L), au premier segment longitudinal (14, 15, 16), de telle manière que les deux segments longitudinaux (14, 15 ou 15, 16) raccordés l'un à l'autre sont reliés entre eux dans le moule.
